(19) **Europäisches Patentamt / European Patent Office / Office européen des brevets**

(11) **EP 3 778 972 B1**

(12) # EUROPEAN PATENT SPECIFICATION

(45) Date of publication and mention
of the grant of the patent:
**06.03.2024  Bulletin 2024/10**

(21) Application number: **20190880.3**

(22) Date of filing: **13.08.2020**

(51) International Patent Classification (IPC):
*C22C 38/00* (2006.01)   *C22C 38/02* (2006.01)
*C22C 38/42* (2006.01)   *C22C 38/44* (2006.01)
*C22C 38/46* (2006.01)   *C22C 38/48* (2006.01)
*C22C 38/50* (2006.01)   *C22C 38/52* (2006.01)
*C22C 38/54* (2006.01)   *C21D 1/18* (2006.01)
*C21D 1/28* (2006.01)   *C21D 6/00* (2006.01)
*C21D 8/10* (2006.01)   *C21D 9/14* (2006.01)
*C21D 9/08* (2006.01)

(52) Cooperative Patent Classification (CPC):
**C22C 38/02; C22C 38/001; C22C 38/002;
C22C 38/42; C22C 38/44; C22C 38/46;
C22C 38/48; C22C 38/50; C22C 38/52;
C22C 38/54;** C21D 1/18; C21D 1/28; C21D 6/004;
C21D 6/007; C21D 6/008;                    (Cont.)

(54) **LOW ALLOY HEAT-RESISTANT STEEL AND STEEL PIPE**

NIEDRIGLEGIERTER HITZEBESTÄNDIGER STAHL UND STAHLROHR

ACIER RÉSISTANT À LA CHALEUR À FAIBLE TENEUR EN ALLIAGE ET TUYAU D'ACIER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.08.2019  JP 2019148554
13.08.2019  JP 2019148555**

(43) Date of publication of application:
**17.02.2021  Bulletin 2021/07**

(73) Proprietor: **NIPPON STEEL CORPORATION
Chiyoda-ku
Tokyo 100-8071 (JP)**

(72) Inventors:
  • **HIRATA, Hiroyuki
    Tokyo, 100-8071 (JP)**
  • **YOSHIZAWA, Mitsuru
    Tokyo, 100-8071 (JP)**
  • **HIGUCHI, Junichi
    Tokyo, 100-8071 (JP)**
  • **TANAKA, Katsuki
    Tokyo, 100-8071 (JP)**
  • **TAKIGUCHI, Masayuki
    Tokyo, 100-8071 (JP)**

(74) Representative: **Vossius & Partner
Patentanwälte Rechtsanwälte mbB
Siebertstrasse 3
81675 München (DE)**

(56) References cited:
  **EP-A1- 1 081 244    EP-A1- 1 143 026
  EP-A2- 0 560 375    CN-A- 109 266 971**

  • **AUTORENKOLLEKTIV: "Spurenelemente im
    Stahl - Moeglichkeiten zur Beeinflussung im
    Smelzbetrieb", SPURENELEMENTE IN
    STAEHLEN, VERLAG STAHLEISEN,
    DUESSELDORF, DE, 1 January 1985
    (1985-01-01), pages 19-22, XP002433212,**

**(Cont. next page)**

(52) Cooperative Patent Classification (CPC): (Cont.)
C21D 8/105; C21D 9/08; C21D 9/14; Y02P 10/20

**Description**

BACKGROUND OF THE INVENTION

Technical Field

The present invention relates to a low alloy heat-resistant steel and a steel pipe.

Related Art

Low alloy heat-resistant steels, typified by 2.25% Cr-1% Mo steels, are widely utilized in equipment used at a high temperature, such as boilers for thermal power generation.

In coal-fired power generation, there is an increasing trend for a higher temperature and higher pressure in steam conditions, in recent years, in order to enhance thermal efficiency.

As steam conditions become increasingly harsh, low alloy heat-resistant steels to be used are required to have a higher creep strength. Therefore, a number of low alloy heat-resistant steels in which creep strength is enhanced by actively incorporating W and B have been proposed.

For example, Patent Document 1 discloses a low alloy steel which contains, by weight: from 2.0% to 8.0% of Cr; from 0.1% to 2.5% of W; from 0.0003% to 0.006% of B; and the like; and in which creep properties and hydrogen corrosion resistance are enhanced by reducing the content of S and N.

Patent Document 2 discloses a low alloy heat-resistant steel having an excellent creep strength and toughness, which contains, by weight: from 1.5% to 3.5% of Cr; from 1% to 3% of W; from 0.0001 to 0.02% of B; and the like; and in which the contents of Ti and N are limited to predetermined ranges.

Patent Document 3 discloses a low alloy heat-resistant steel having an excellent high temperature strength, long-term creep properties and/or low temperature toughness, which contains, by mass: from 1.5% to 3% of Cr; from 1% to 3% of W; from 0.0001% to 0.02% of B; and the like. In this low alloy heat-resistant steel, any one or all of the following properties are limited to predetermined ranges: lath widths of bainite and martensite as well as a mean value of subgrain size of ferrite; the amount of solid solution of [W + Mo] and average crystal grain size; and the amount of solid solution of [W + Mo] on grain boundaries and average crystal grain size.

Patent Document 4 discloses a low alloy steel pipe for heat-resistant applications, which includes a metallographic structure mainly composed of bainite, and which has a high high-temperature strength. This low alloy steel pipe contains, by mass: one or more elements selected from the group consisting of from 0.5% to 2.7% of Cr, from 0.01% to 1% of Mo and from 0.01% to 2% of W; from 0.0020 to 0.0100% of B; and the like; and relations between the contents of the elements, including other alloy elements, satisfy predetermined ranges.

Patent Document 5 discloses a low alloy heat-resistant steel pipe for use in a boiler, having an excellent high temperature strength and wear resistance. This low alloy steel pipe contains: one or more elements selected from the group consisting of from 0.5% to 3.5% of Cr, from 0.01% to 2.0% of Mo and from 0.01% to 3.0% of W; from 0.0001 to 0.02% of B; and the like; and has a ferrite fraction in the metallographic structure of 20% or less, and a Vickers hardness at a portion other than a ferrite structure of 200 Hv or more.

Patent Document 6 discloses a low Cr ferrite-based steel pipe for use in a boiler, which has excellent long-term creep properties, and which contains one or more elements selected from the group consisting of from 0.5% to 3.5% of Cr, from 0.01% to 2.0% of Mo and from 0.01% to 3.0% of W; from 0.0003 to 0.01% of B; and the like. This steel pipe has a ferrite fraction in the structure of from 20% to 80%, and the structure other than the ferrite structure is composed of martensite, bainite and pearlite.

Patent Document 7 discloses a low alloy steel which contains: more than 1.5% up to 2.5% of Cr; from 0.01 to 1.0% of Mo; from 0.04 to 0.30% of V; from 0.0001 to 0.020% of B; 2.0% or less of W; and the like; and which has excellent high temperature creep properties and toughness.

Citation List

Patent Documents

Patent Document 1: Japanese Patent Application Laid-Open (JP-A) No. S63-18038
Patent Document 2: JP-A No. H4-268040
Patent Document 3: JP-A No. 2002-194485
Patent Document 4: JP-A No. 2003-64449

Patent Document 5: JP-A No. 2002-294402
Patent Document 6: JP-A No. 2003-286543
Patent Document 7: WO 2006/112428

EP 1081244 A1 and EP 1143026 A1 describe heat resistant steels.

SUMMARY OF THE INVENTION

Technical Problem

Low alloy heat-resistant steels are required to have not only a sufficient creep strength during use at a high temperature (for example, during the operation of a boiler for power generation, in which a low alloy heat-resistant steel used, etc.), but also sufficient mechanical performance, namely, sufficient tensile properties and toughness, in order to ensure soundness of the steel as a structure before being used at a high temperature (for example, during the process of assembling the above described boiler before the start of the operation thereof, etc.).

It is considered that the low alloy heat-resistant steels and the steel pipes disclosed in Patent Documents 1 to 7 may fail to stably provide the above described mechanical performance (tensile properties and toughness), even if able to exhibit an excellent creep strength.

The present invention has been made in view of the above described current circumstances, and an object of the present disclosure is to provide a low alloy heat-resistant steel which contains W and B, in which material cost is reduced, and which has a high tensile strength and toughness, as well as a steel pipe formed therefrom.

Solution to Problem

The present invention for achieving the above described object is as defined in the appended claims.

By having the above described constitutions, the low alloy heat-resistant steel and the steel pipe according to the present invention have a high tensile strength and toughness, and in addition, have a high creep strength when used for long period of time, which is an important performance required for a low alloy heat-resistant steel and a steel pipe.

Advantageous Effects of Invention

The present invention provides a low alloy heat-resistant steel which contains W and B, in which material cost is reduced, and which has a high tensile strength and toughness, as well as a steel pipe formed therefrom.

DETAILED DESCRIPTION OF THE INVENTION

In order to solve the above mentioned problems, the present inventors have done a detailed investigation on low alloy heat-resistant steels containing from 1.0% to 2.2% of W and from 0.001% to 0.006% of B. As a result, the following findings have been revealed.

When the steels varying in tensile strength and toughness were compared, the results revealed that the steels in which a $M_{23}C_6$-type carbide and a $M_7C_3$-type carbide which contain W were finely and densely dispersed in grain boundaries and within grains, showed a sufficient performance. In contrast, the steels in which the amounts of precipitation of the $M_{23}C_6$-type carbide and the $M_7C_3$-type carbide which contain W were small, or alternatively, in which these carbides precipitated conversely in a large amount, or precipitated coarsely and sparsely, showed a poor performance. Based on these results, it is assumed that these mechanical properties are unstable because of the following reasons.

(1) W dissolves as a solid solution in a steel, or is finely dispersed and precipitated as the $M_{23}C_6$-type carbide or the $M_7C_3$-type carbide containing W during a tempering heat treatment in the production of the steel, thereby contributes to an improvement in the tensile strength. However, in a case in which the $M_{23}C_6$-type carbide and the $M_7C_3$-type carbide which contain W precipitate sparsely and in a small amount, a sufficient precipitation strengthening effect cannot be obtained, failing to provide the required tensile strength. Conversely, in a case in which the $M_{23}C_6$-type carbide and the $M_7C_3$-type carbide which contain W precipitate coarsely, the carbides do not contribute to strengthening, and at the same time, a solid solution strengthening effect provided by W is also reduced, failing to provide the required tensile strength.

(2) Further, the fact that W precipitates as the $M_{23}C_6$-type carbide or the $M_7C_3$-type carbide in the tempering heat treatment facilitates the recovery and softening of the structure. However, in a case in which the $M_{23}C_6$-type carbide and the $M_7C_3$-type carbide which contain W precipitate in a small amount, only a small precipitation strengthening effect is obtained, failing to provide a sufficient toughness. Conversely, in a case in which the $M_{23}C_6$-type carbide and the $M_7C_3$-type carbide which contain W precipitate coarsely, origins of fracture are increased, failing to provide the required toughness.

As a result of various studies, the present inventors have found out that it is possible to obtain the required performance, stably, by controlling the amount of W, analyzed as the electrolytic extraction residue, within a predetermined range, depending on the amount of B contained in a steel. The reason for this is thought to be as follows.

(1) As described above, W precipitates as the $M_{23}C_6$-type carbide or the $M_7C_3$-type carbide in the tempering heat treatment, and contributes to an improvement in tensile strength. B is thought to have the effect of allowing these carbides to disperse finely and densely, without affecting the amount of precipitation, by replacing C in these carbides and dissolving as a solid solution in the carbides. This enables to obtain the precipitation strengthening effect, and the required tensile strength is more likely to be obtained even with a small amount of precipitation. Further, even in a case in which the carbides precipitate in a large amount, the size of the precipitates is small and the precipitation strengthening effect is maintained, making it more likely to obtain a sufficient tensile strength.
(2) In addition, it is thought to have the effect of reducing the size of the precipitates, without affecting the amount of precipitation. As a result, the recovery and softening of the structure are facilitated, and the precipitated carbides are less likely to be the origins of fracture, making it more likely to obtain the required toughness.

As described above, it has been revealed that it is possible to obtain both a high tensile strength and a favorable toughness in a balanced manner, by controlling the amount of W, analyzed as the electrolytic extraction residue, within a predetermined range depending on the amount of B contained in a steel.

However, it has been found out that, in a case in which Sn is further incorporated in order to improve corrosion resistance, there is a case in which a sufficient toughness cannot be stably obtained, for example, when used in an application in which heating to a high temperature and cooling to normal temperature are repeatedly carried out, such as a pipe to be used in a boiler for exhaust heat recovery.

Therefore, the present inventors have also investigated low alloy heat-resistant steels containing Sn. As a result, the following findings have been revealed.

(1) When the toughness of the steels which had been repeatedly subjected to heating to a high temperature and cooling to normal temperature were investigated, a marked decrease in the toughness was observed, as the content of Sn was increased.
(2) When the fracture surfaces of the steels after being subjected to an impact test were observed, fractured regions were present in a mixed state in prior austenite grain boundaries on the fracture surfaces, and the proportion thereof increased as the content of Sn was increased. Further, Sn was detected from the fracture surfaces at which fracture occurred in the prior austenite grain boundaries.

Based on the above results, it was assumed that the decrease in the toughness was due to the following reasons.

Sn contained in a low alloy heat-resistant steel is segregated in the prior austenite grain boundaries in the process of being repeatedly heated to a high temperature and cooled to normal temperature during use. Sn causes a decrease in the binding force in the grain boundaries, as a result of which the toughness is reduced.

The present inventors have also found out, as a result of further investigation, that it is possible to obtain a favorable toughness by controlling the amount of B within a predetermined range depending on the amount of Sn contained in a steel, even in a case in which heating to a high temperature and cooling to normal temperature are repeatedly carried out. The reason for this is thought to be as follows.

Since B is an element that rapidly diffuses and is prone to segregation to grain boundaries, B is preferentially segregated to the prior austenite grain boundaries in the process of being repeatedly heated to a high temperature and cooled to normal temperature during use, and causes a decrease in grain boundary energy. This reduces the preferential segregation of Sn to the grain boundaries, and reduces a decrease in the binding force, thereby enabling to obtain an excellent toughness.

The present invention has been completed based on the above described findings.

In other words, the low alloy heat-resistant steel according to the present invention contains, by mass:

from 0.03% to 0.09% of C;
from 0.10% to 0.30% of Si;
from 0.15% to 0.60% of Mn;
0.020% or less of P;
0.0060% or less of S;
from 0.01% to 0.50% of Ni;
from 0.01% to 0.50% of Co;
from 0.01% to 0.50% of Cu;
from 2.0% to 3.0% of Cr;

from 0.05% to 0.35% of Mo;
from 1.0% to 2.2% of W;
from 0.15% to 0.28% of V;
from 0.01% to 0.11% of Nb;
from 0.002% to 0.022% of Ti;
from 0.001% to 0.006% of B;
from 0.001% to 0.012% of N;
0.020% or less of Al; and
0.020% or less of O; and
optionally at least one element selected from the group consisting of
0.20% or less of Ta;
0.0150% or less of Ca;
0.0150% or less of Mg;
0.050% or less of REM; and
Sn in an amount satisfying the following Formula (3)

$$[\%Sn] \leq 2 \times [\%B] + 0.010\,(\%) \qquad (3)$$

with the balance consisting of Fe and impurities,
wherein the total amount of Ni, Co and Cu satisfies the following Formula (1), and the amount of W, analyzed as the electrolytic extraction residue, satisfies the following Formula (2):

$$0.03 \leq [\%Ni] + [\%Co] + [\%Cu] \leq 0.80 \qquad (1)$$

$$-10 \times [\%B] + 0.07 \leq [\%W]_{ER} \leq 10 \times [\%B] + 0.18 \qquad (2)$$

wherein in Formulae (1), (2) and (3), [%Ni], [%Co], [%Cu], [%B] and [%Sn] represent the amounts of Ni, Co, Cu, B and Sn, in % by mass, contained in the steel, respectively; and [%W]$_{ER}$ represents the amount of W, analyzed as the electrolytic extraction residue, in % by mass.

In a preferred embodiment, the low alloy heat-resistant steel contains Sn in an amount satisfying the following Formula (3), with the balance consisting of Fe and impurities:

$$[\%Sn] \leq 2 \times [\%B] + 0.010\,(\%) \qquad (3)$$

wherein in Formula (3), [%Sn] and [%B] represent the amounts of Sn and B, in % by mass, contained in the steel, respectively.

An embodiment which is one example of the present invention will now be described.

In the present invention the description "%" used to describe the content of each element means the content thereof in "% by mass". Further, in the present invention, any numerical range described using the expression "from * to" refers to a range in which numerical values described before and after the "to" are included in the range as a lower limit value and an upper limit value of the range, unless otherwise defined. It is noted, however, any numerical range in which the expression "more than" or "less than" is attached to the numerical value(s) described before and/or after the "to" refers to a range which does not include the numerical value(s) as the lower limit value and/or the upper limit value.

In a numerical range described in stages, in the present invention, the upper limit value of a certain numerical range described in stages may be replaced with the upper limit value in another numerical value described in stages, and the lower limit value of a certain numerical range described in stages may be replaced with the lower limit value in another numerical value described in stages. Further the upper limit value or the lower limit value may be replaced with a value shown in Examples.

Further, the definition of the term "step" includes not only an independent step, but also a step which is not clearly distinguishable from another step, as long as the intended purpose of the step is achieved.

In the "low alloy" in the present invention, the total content of alloy elements is not limited. Therefore, when the contents of the respective elements in a steel are within the above described ranges, respectively, and the relations of the above described Formulae (1) and (2) are satisfied, the steel is included in the definition of the low alloy heat-resistant steel according to the present invention

[Composition]

The reasons for limiting the composition of the low alloy heat-resistant steel, in the present invention are as follows.

C: from 0.03% to 0.09%

C is effective for obtaining a bainite structure. At the same time, C forms carbides, and contributes to an improvement in the tensile strength and the creep strength. To sufficiently obtain these effects, 0.03% or more of C needs to be contained. However, the incorporation of an excessive amount of C rather causes a decrease in the creep strength and the toughness. Accordingly, the content of C is set to 0.09% or less. The lower limit of the content of C is preferably 0.04%, and the upper limit thereof is preferably 0.08%. The lower limit of the content of C is more preferably 0.05%, and the upper limit thereof is more preferably 0.07%.

Si: from 0.10% to 0.30%

Si is contained as a deoxidizing agent, but is also an element effective for improving steam oxidation resistance. To sufficiently obtain this effect, 0.10% or more of Si needs to be contained. However, the incorporation of an excessive amount of Si causes a decrease in the ductility. Accordingly, the content of Si is set to 0.30% or less. The lower limit of the content of Si is preferably 0.12%, and the upper limit thereof is preferably 0.28%. The lower limit of the content of Si is more preferably 0.15%, and the upper limit thereof is more preferably 0.25%.

Mn: from 0.15% to 0.60%

Mn is contained as a deoxidizing agent, as with the case of Si, but is also effective for obtaining a bainite structure. To sufficiently obtain this effect, 0.15% or more of Mn needs to be contained. However, the incorporation of an excessive amount of Mn causes creep embrittlement. Accordingly, the content of Mn is set to 0.60% or less. The lower limit of the content of Mn is preferably 0.17%, and the upper limit thereof is preferably 0.40%. The lower limit of the content of Mn is more preferably 0.20%, and the upper limit thereof is more preferably 0.30%.

P: 0.020% or less

The incorporation of an excessive amount of P causes a decrease in creep ductility. Therefore, the content of P needs to be 0.020% or less. The content of P is preferably 0.018% or less, and more preferably 0.015% or less. The content of P is the smaller, the better; in other words, a content of P closer to 0% is more preferred. However, an extreme reduction in the content of P causes an extreme increase in material cost. Accordingly, the lower limit of the content of P is preferably 0.0005%, and more preferably 0.001%.

S: 0.0060% or less

The incorporation of an excessive amount of S causes a decrease in the creep ductility and the toughness. Therefore, the content of S needs to be 0.0060% or less. The content of S is preferably 0.0050% or less, and more preferably 0.0040% or less. The content of S is the smaller, the better; in other words, a content of S closer to 0% is more preferred. However, an extreme reduction in the content of S causes an extreme increase in production cost. Accordingly, the lower limit of the content of S is preferably 0.0002%, and more preferably 0.0004%.

Ni: from 0.01% to 0.50%

Ni is an element effective for obtaining a bainite structure. At the same time, Ni also contributes to an improvement in the toughness. Further, Ni improves manufacturability of the low alloy heat-resistant steel. To obtain these effects, 0.01% or more of Ni needs to be contained. However, Ni is an expensive element, and the incorporation of an excessive amount of Ni causes an increase in the cost. Accordingly, the upper limit of the content of Ni is set to 0.50%. The lower limit of the content of Ni is preferably 0.02%, and the upper limit thereof is preferably 0.45%. The lower limit of the content of Ni is more preferably 0.03%, and the upper limit thereof is more preferably 0.40%.

It is noted that the content of Ni needs to satisfy the relation with Co and Cu to be described later.

Co: from 0.01% to 0.50%

Co is an element effective for obtaining a bainite structure, and also contributes to an improvement in the toughness, as with the case of Ni. Further, Co improves the manufacturability of the low alloy heat-resistant steel. To obtain these effects, 0.01% or more of Co needs to be contained. However, Co is an extremely expensive element, and the incorporation of an excessive amount of Co causes an increase in the cost. Accordingly, the upper limit of the content of Co is set to 0.50%. The lower limit of the content of Co is preferably 0.02%, and the upper limit thereof is preferably 0.45%. The lower limit of the content of Co is more preferably 0.03%, and the upper limit thereof is more preferably 0.40%.

It is noted that the content of Co needs to satisfy the relation with Ni and Cu to be described later.

Cu: from 0.01% to 0.50%

Cu is an element effective for obtaining a bainite structure, and also contributes to an improvement in the toughness, as with the cases of Ni and Co. Further, Cu improves the manufacturability of the low alloy heat-resistant steel. To obtain these effects, 0.01% or more of Cu needs to be contained. However, Cu is an expensive element, and the incorporation of an excessive amount of Cu causes an increase in the cost. Accordingly, the upper limit of the content of Cu is set to 0.50%. The lower limit of the content of Cu is preferably 0.02%, and the upper limit thereof is preferably 0.45%. The lower limit of the content of Cu is more preferably 0.03%, and the upper limit thereof is more preferably 0.40%.

It is noted that the content of Cu needs to satisfy the relation with Ni and Co to be described later.

Cr: from 2.0% to 3.0%

Cr is an element effective for ensuring the steam oxidation resistance at a high temperature and corrosion resistance. Further, Cr precipitates as carbides, and also contributes to an improvement in the creep strength. To sufficiently obtain these effects, 2.0% or more of Cr needs to be obtained. However, the incorporation of an excessive amount of Cr causes a decrease in the stability of the carbides, and rather decreases the creep strength. Accordingly, the content of Cr is set to 3.0% or less. The lower limit of the content of Cr is preferably 2.2%, and the upper limit thereof is preferably 2.8%. The lower limit of the content of Cr is more preferably 2.4%, and the upper limit thereof is more preferably 2.6%.

Mo: from 0.05% to 0.35%

Mo dissolves as a solid solution in a matrix, and contributes to ensuring the tensile strength and the creep strength at a high temperature. To sufficiently obtain this effect, 0.05% or more of Mo needs to be contained. However, the incorporation of an excessive amount of Mo results in the saturation of the effect, and at the same time, causes an increase in the material cost, since Mo is an expensive element. Accordingly, the content of Mo is set to 0.35% or less. The lower limit of the content of Mo is preferably 0.15%, and the upper limit thereof is preferably 0.33%. The lower limit of the content of Mo is more preferably 0.25%, and the upper limit thereof is more preferably 0.30%.

W: from 1.0% to 2.2%

W dissolves as a solid solution in the matrix, or precipitates as the $M_{23}C_6$-type carbide or the $M_7C_3$-type carbide, and contributes to ensuring the tensile strength and the creep strength at a high temperature. To obtain this effect, 1.0% or more of W needs to be contained. However, the incorporation of an excessive amount of W results in the saturation of the effect, and at the same time, causes an increase in the material cost, since W is an expensive element. Accordingly, the content of W is set to 2.2% or less. The lower limit of the content of W is preferably 1.2%, and the upper limit thereof is preferably 2.0%. The lower limit of the content of W is more preferably 1.4%, and the upper limit thereof is more preferably 1.8%.

It is noted that the content of W as used herein refers to the total amount of W contained in the low alloy heat-resistant steel. In other words, the content of W refers to the total of the amount of W dissolved as a solid solution in the matrix and the amount of W present as precipitates. In the present disclosure, in addition to satisfying the above described range of the content of W, the amount of W present as precipitates, namely, the amount of W analyzed as the electrolytic extraction residue, needs to satisfy the relationship with the amount of B, as will be described later.

V: from 0.15% to 0.28%

V precipitates within the grains as fine carbonitrides, and contributes to an improvement in the creep strength. To obtain this effect, 0.15% or more of V needs to be contained. However, when the content of V is increased excessively, V carbonitride precipitates coarsely and in a large amount, and rather causes a decrease in the creep strength and the creep ductility. Accordingly, the content of V is set to 0.28% or less. The lower limit of the content of V is preferably 0.17%, and the upper limit thereof is preferably 0.26%. The lower limit of the content of V is more preferably 0.18%, and the upper limit thereof is more preferably 0.24%.

Nb: from 0.01% to 0.11%

Nb precipitates within the grains as fine carbonitrides, and contributes to an improvement in the creep strength, as with the case of V. To obtain this effect, 0.01% or more of Nb needs to be contained. However, when Nb is contained excessively, Nb carbonitride precipitates coarsely and in a large amount, and rather causes a decrease in the creep strength and the creep ductility. Accordingly, the content of Nb is set to 0.11% or less. The lower limit of the content of Nb is preferably 0.02%, and the upper limit thereof is preferably 0.10%. The lower limit of the content of Nb is more preferably 0.03%, and the upper limit thereof is more preferably 0.08%.

Ti: from 0.002% to 0.022%

Ti precipitates within the grains as fine carbonitrides, and contributes to an improvement in the creep strength, as with the case of V and Nb. To obtain this effect, 0.002% or more of Ti needs to be contained. However, when Ti is contained excessively, Ti carbonitride precipitates coarsely and in a large amount, and rather causes a decrease in the creep strength and the creep ductility. Accordingly, the content of Ti is set to 0.022% or less. The lower limit of the content of Ti is preferably 0.004%, and the upper limit thereof is preferably 0.020%. The lower limit of the content of Ti is more preferably 0.005%, and the upper limit thereof is more preferably 0.018%.

B: from 0.001% to 0.006%

B has the effect of dissolving as a solid solution in the $M_{23}C_6$-type carbide or the $M_7C_3$-type carbide, to allow the carbide to finely disperse, and thereby contributes to ensuring the tensile strength and the toughness. Further, B also contributes to an improvement in the creep strength. To obtain these effects, 0.001% or more of B needs to be contained. However, when an excessive amount of B is contained, B mixes into a weld metal during welding, resulting in an increased susceptibility to solidification cracking. Accordingly, the upper limit of the content of B is set to 0.006%. The lower limit of the content of B is preferably 0.002%, and the upper limit thereof is more preferably 0.005%. The lower limit of the content of B is more preferably 0.003%, and the upper limit thereof is more preferably 0.004%. It is noted, in the present disclosure, that the amount of W present as precipitates, namely, the amount of W analyzed as the electrolytic extraction residue, needs to satisfy a predetermined relationship with the content of B, as will be described later.

N: from 0.001% to 0.012%

N binds to V, Nb or Ti during use at a high temperature and precipitates within the grains as fine carbonitrides, and thus contributes to an improvement in the creep strength. To obtain this effect, 0.001% or more of N needs to be contained. However, the incorporation of an excessive amount of N leads to coarsening of carbonitrides, and rather causes a decrease in the creep ductility. Accordingly, the content of N is set to 0.012% or less. The lower limit of the content of N is preferably 0.002%, and the upper limit thereof is preferably 0.010%. The lower limit of the content of N is more preferably 0.003%, and the upper limit thereof is more preferably 0.008%.

Al: 0.020% or less

Al is contained as a deoxidizing agent. However, the incorporation of a large amount of Al markedly deteriorates cleanliness, resulting in a poor workability. Further, the incorporation of a large amount of Al is not preferred also from the viewpoint of the creep strength. Accordingly, the content of Al is set to 0.020% or less. The content of Al is preferably 0.018% or less, and more preferably 0.015% or less. There is no need to set the lower limit, in particular, but an extreme decrease in the content of Al causes an increase in the production cost. Therefore, the content of Al is preferably set to 0.001% or more.

O: 0.020% or less

O is present as an impurity, and causes a decrease in the workability when contained in a large amount. Accordingly, the content of O is set to 0.020% or less. The content of O is preferably 0.015% or less, and more preferably 0.010% or less. There is no need to set the lower limit, in particular; namely, the content of O may be 0%. However, an extreme decrease in the content of O causes an increase in the production cost. Therefore, the content of O is preferably set to 0.001% or more.

Total amount of Ni, Co and Cu: from 0.03% to 0.80%

As described above, Ni, Co and Cu are elements effective for obtaining a bainite structure, and also contribute to an improvement in the toughness. Further, Ni, Co and Cu improve the manufacturability of the low alloy heat-resistant steel. However, the incorporation of excessive amounts of Ni, Co and Cu results in the saturation of these effects, and at the same time, causes an increase in the material cost, since all of these elements are expensive elements. Accordingly, the total amount of these elements is set within a range of from 0.03% to 0.80%. The total amount of Ni, Co and Cu is preferably within a range of from 0.04% to 0.70%, and more preferably within a range of from 0.05% to 0.60%.

Amount of W ($[\%W]_{ER}$) Analyzed as Electrolytic Extraction Residue:

$$-10 \times [\%B] + 0.07 \leq [\%W]_{ER} \leq 10 \times [\%B] + 0.18$$

W contained in the low alloy heat-resistant steel precipitates in the form contained in the $M_{23}C_6$-type carbide or the $M_7C_3$-type carbide, during the tempering heat treatment in the production process. When precipitated finely, these carbides contribute to ensuring the tensile strength, whereas when precipitated excessively, these carbides cause a decrease in the toughness. The amounts of these carbides can be estimated as the amount of W analyzed as the electrolytic extraction residue.

When the amounts of the $M_{23}C_6$-type carbide and the $M_7C_3$-type carbide which contain W are small, it leads to a small precipitation strengthening effect, and a failure to obtain the required tensile strength. In addition, the recovery and softening of the structure do not proceed, and the toughness is also decreased. When these carbides are excessively coarsened, on the other hand, the carbides do not contribute to the strengthening. At the same time, the amount of W dissolved as a solid solution in the matrix is reduced, and a solid solution strengthening effect is also reduced, resulting in a failure to obtain the required tensile strength. Further, the carbides become the origins of fracture, leading to a decrease in the toughness.

Since B contained in the steel has the effect of allowing the $M_{23}C_6$-type carbide or the $M_7C_3$-type carbide to precipitate finely, without affecting the amount of precipitation, it enables to easily obtain the precipitation strengthening effect even with a small amount of precipitation. At the same time, B is capable of reducing the size of precipitates, to prevent the disappearance of the precipitation strengthening effect and a decrease in the toughness due to the carbides being the origins of fracture. Therefore, in order to obtain the required tensile strength and toughness, the lower limit and the upper limit of the amount of precipitation, namely, of the amount of W analyzed as the electrolytic extraction residue, namely, of $[\%W]_{ER}$, need to be set so as to satisfy the following Formula, depending on the amount of B.

$$-10 \times [\%B] + 0.07 \leq [\%W]_{ER} \leq 10 \times [\%B] + 0.18$$

The amount of W analyzed as the electrolytic extraction residue can be adjusted by controlling the amounts of W and C contained in the steel, as well as the conditions of the tempering heat treatment. Specifically, larger amounts of W and C contained in the steel result in a larger amount of W analyzed as the electrolytic extraction residue. Further, in the tempering heat treatment used for the steel according to the present disclosure, a higher temperature and/or a longer period of time result(s) in a larger amount of W analyzed as the electrolytic extraction residue. In the cooling after the tempering treatment, a lower cooling rate results in a larger amount of W analyzed as the electrolytic extraction residue.

The amount of W analyzed as the electrolytic extraction residue is measured as follows.

A test material having a predetermined size is collected from the low alloy heat-resistant steel. It is noted that the amount of W analyzed as the electrolytic extraction residue does not vary depending on the size and the shape of the test material, and the size and the shape of the test material are not particularly limited. For example, a test specimen having a size of 8 mm square and a length of 40 mm can be suitably used. Anodic dissolution of the test material is carried out at a current density of 20 mA/cm$^2$, by chronopotentiometry using a 10% by volume acetylacetone-1% by mass tetramethyl ammonium chloride-methanol solution, as an electrolytic solution, and carbides are extracted as a residue. After acid decomposition of the extracted residue, ICP (inductively coupled plasma) emission spectrometry is carried out to measure the mass of W in the residue. The mass of W in the residue is divided by the amount of dissolution of the test material, to determine the amount of W present as carbides. In other words, the thus determined amount of W is the amount of W (% by mass) analyzed as the electrolytic extraction residue.

Further, the low alloy heat-resistant steel according to the present disclosure may contain Sn, instead of a part of Fe, in an amount within a range satisfying a predetermined relationship with the content of B. The reasons for the limitation will be described below.

Sn: 2 × [%B] + 0.010(%) or less

Sn may be contained, since Sn is concentrated under the scales on the surface of the steel and serves effectively for an improvement in the corrosion resistance. However, in a case in which the steel contains an excessive amount of Sn, and when the steel is subjected to repeated heating and cooling, for example, Sn is segregated to grain boundaries during the process thereof, causing a decrease in the toughness. Therefore, in the present invention the content of Sn is set to equal to or lower than 2 × [%B] + 0.010 (%), depending on the amount of B, which is more prone to segregation to grain boundaries than Sn and which reduces the segregation of Sn to prevent a decrease in the toughness. In the case of containing Sn, the lower limit of the content of Sn is preferably 0.001%, and more preferably 0.002%.

Further, the low alloy heat-resistant steel according to the present invention may contain, instead of a part of Fe, at least one element selected from the group consisting of: 0.20% or less of Ta; 0.0150% or less of Ca; 0.0150% or less of Mg; and 0.050% or less of REM. The reasons for the limitation will be described below.

Ta: 0.20% or less

Ta may be contained, if necessary, since Ta precipitates within the grains as fine carbonitrides, and contributes to an improvement in the creep strength, as with the case of Nb, V and Ti. However, when Ta is contained excessively, Ta carbonitride precipitates coarsely and in a large amount, and rather causes a decrease in the creep strength and the creep ductility. Accordingly, the content of Ta is set to 0.20% or less. The upper limit of the content of Ta is preferably 0.18%, and more preferably 0.15% or less. In the case of containing Ta, the lower limit of the content of Ta is preferably 0.01%, and more preferably 0.02%.

Ca: 0.0150% or less

Ca may be contained, if necessary, since Ca has the effect of improving hot workability in the production process. However, when an excessive amount of Ca is contained, Ca binds to oxygen to cause a marked deterioration in the cleanliness, and rather results in an impaired hot workability. Accordingly, the content of Ca is set to 0.0150% or less. The content of Ca is preferably 0.0120% or less, and more preferably 0.0100% or less. In the case of containing Ca, the lower limit of the content of Ca is preferably 0.0005%, and more preferably 0.0010%.

Mg: 0.0150% or less

Mg may be contained, if necessary, since Mg has the effect of improving the hot workability in the production process, as with the case of Ca. However, when an excessive amount of Mg is contained, Mg binds to oxygen to cause a marked deterioration in the cleanliness, and rather results in an impaired hot workability. Accordingly, the content of Mg is set to 0.0150% or less. The content of Mg is preferably 0.0120% or less, and more preferably 0.0100% or less. In the case of containing Mg, the lower limit of the content of Mg is preferably 0.0005%, and more preferably 0.0010%.

REM: 0.050% or less

REM (rare earth metal element(s)) may be contained, if necessary, since REM improves the hot workability in the production process, as with the case of Ca and Mg. However, when an excessive amount of REM is contained, REM binds to oxygen to cause a marked deterioration in the cleanliness of the resulting alloy, and rather results in a decrease in the hot workability. Accordingly, the upper limit of the content of REM is set to 0.050%. The upper limit of the content of REM is preferably 0.040% or less, and more preferably 0.030% or less. In the case of containing REM, the lower limit of the content of REM is preferably 0.001%, and more preferably 0.005%.

It is noted that the "REM" is a generic term used to refer to a total of 17 elements, which are Sc, Y and lanthanoid elements. The content of REM refers to the total content of one kind, or two or more kinds, of REM elements. Further, REM is generally contained in misch metal. Therefore, for example, misch metal may be added to the alloy to adjust the content of REM within the above described range.

[Performance]

Further, the low alloy heat-resistant steel according to the present invention preferably has the following performance.

(1) Tensile Strength

The low alloy heat-resistant steel according to the present disclosure preferably has a tensile strength of 510 MPa or more, and more preferably 530 MPa or more.

The tensile strength is measured in accordance with JIS Z2241: 2011 and using a No. 14A round-bar test specimen in which the diameter of parallel portion is 8 mm and the length of the parallel portion is 55 mm, at room temperature (from 10°C to 35°C).

(2) Full-size Charpy Absorbed Energy

The low alloy heat-resistant steel according to the present invention has a full-size Charpy absorbed energy at 20°C of 27J or more.

The full-size Charpy absorbed energy is measured in accordance JIS Z2242: 2005 and using a full-size Charpy impact test specimen with a 2 mm V-notch, at 20°C.

[Production Method]

The method of producing the low alloy heat-resistant steel according to the present invention is not particularly limited. The production method thereof will be described with reference to one example.

(1) Forming Step

In the production of the low alloy heat-resistant steel according to the present invention a raw material (steel material) having the above described composition (chemical components) is formed into a final shape of the low alloy heat-resistant steel. The forming step includes all the processes involving the deformation of the steel material into a final shape, such as casting, forging, rolling, and the like.

One example of the forming step may be, for example, a step in which an ingot obtained by melting and casting the raw material is subjected to hot forging and hot rolling, or alternatively, subjected to hot forging, hot rolling and cold working, to be formed into a final shape of the low alloy heat-resistant steel.

(2) Normalizing Heat Treatment Step

After the forming step, a normalizing heat treatment may be carried out, for example. For example, it is preferred that the normalizing heat treatment is carried out under the conditions of a temperature of from 1,000°C to 1,100°C, and a period of time from 0.1 to 1.5 hours.

It is noted that there is a case in which the amount of W analyzed as the electrolytic extraction residue, described above, is affected by the normalizing heat treatment. In other words, when the normalizing treatment is carried out at a low temperature, and/or for a too short a period of time, there is a case in which the carbides containing W which have been formed during the production process up to that point may fail to sufficiently dissolve as a solid solution in the matrix, possibly resulting in an increase in the amount of W analyzed as the electrolytic extraction residue. Alternatively, when the normalizing treatment is carried out at a high temperature, and/or for a too long a period of time, there is a case in which the grain size of the prior austenite is increased, possibly resulting in a decrease in the toughness.

(3) Tempering Heat Treatment Step

Further, after the normalizing heat treatment step, a tempering heat treatment may be carried out, for example. For example, it is preferred that the tempering heat treatment is carried out under the conditions of a temperature of 750°C to 790°C, and a period of time from 1 to 5 hours.

It is noted that the method described above is one example. For example, there is a case in which the low alloy heat-resistant steel according to the present disclosure can be produced even though the above described preferred conditions for the normalizing heat treatment and the tempering heat treatment are not satisfied, depending on the steel components and conditions in other steps.

[Applications]

The applications of the low alloy heat-resistant steel according to the present invention are not limited. The low alloy heat-resistant steel is suitably used, for example, in equipment used at a high temperature, such as a boiler for power generation.

Examples of the equipment used at a high temperature include: boiler pipes for use in coal-fired power generation plants, petroleum-fired power generation plants, garbage incineration power plants, biomass power generation plants, and the like; and decomposition pipes for use in petrochemical plants.

In the present disclosure, the expression "used at a high temperature" refers to, for example, an embodiment in which the steel is used in an environment of from 350°C to 700°C (further, from 400°C to 650°C).

For example, in the case of producing a steel pipe formed from the low alloy heat-resistant steel according to the present invention it is possible to use a known technique for producing a pipe, except for using the low alloy heat-resistant steel according to the present disclosure for the body of the steel pipe. Specifically, the steel pipe may be a seamless steel pipe formed from the low alloy heat-resistant steel according to the present disclosure, or may be a welded pipe produced by forming the low alloy heat-resistant steel according to the present disclosure in the form of a pipe, followed by welding.

EXAMPLES

The low alloy heat-resistant steel according to the present invention will now be described in more specific detail, with reference to Examples. It is noted, however, that the low alloy heat-resistant steel according to the present invention is in no way limited to these Examples.

< Example 1 >

Ingots were prepared by melting and casting raw materials A to J each containing chemical components shown in Table 1, in laboratory. The ingots were subjected to hot forging and hot rolling, in this order, and formed to a thickness of 15 mm. The resulting raw materials were processed into plate materials each having a length of 150 mm and a width of 150 mm.

The thus obtained plate materials were subjected to normalizing and tempering heat treatments as shown in Table 2, to prepare test materials of steel plates.

In Table 1 and in Table 2 to be described later, under lined values indicate that these values are outside the ranges defined in the present invention.

Table 1: Chemical components of raw materials used (unit: % by mass, balance: Fe and impurities)

| Symbol | C | Si | Mn | P | S | Ni | Co | Cu | Cr | Mo | W | V | Nb | Ti | B | N | Al | O | Others | Total of Ni, Co and Cu |
|---|---|---|---|---|---|---|---|---|---|---|---|---|---|---|---|---|---|---|---|---|
| A | 0.08 | 0.19 | 0.27 | 0.015 | 0.0015 | 0.35 | 0.03 | 0.04 | 2.4 | 0.25 | 1.8 | 0.22 | 0.04 | 0.016 | 0.003 | 0.005 | 0.009 | 0.007 |  | 0.42 |
| B | 0.08 | 0.21 | 0.20 | 0.016 | 0.0020 | 0.40 | 0.29 | 0.10 | 2.6 | 0.27 | 1.6 | 0.18 | 0.05 | 0.018 | 0.002 | 0.002 | 0.012 | 0.006 | Ca: 0.002 | 0.79 |
| C | 0.05 | 0.25 | 0.29 | 0.015 | 0.0034 | 0.01 | 0.45 | 0.01 | 2.4 | 0.30 | 1.4 | 0.24 | 0.02 | 0.020 | 0.004 | 0.002 | 0.009 | 0.007 | REM: 0.03 | 0.47 |
| D | 0.06 | 0.16 | 0.35 | 0.018 | 0.0024 | 0.34 | 0.02 | 0.11 | 2.8 | 0.20 | 1.6 | 0.17 | 0.08 | 0.005 | 0.005 | 0.010 | 0.008 | 0.008 | Mg: 0.001, Ta: 0.03 | 0.47 |
| E | 0.07 | 0.20 | 0.18 | 0.017 | 0.0003 | 0.20 | 0.18 | 0.40 | 2.2 | 0.25 | 1.5 | 0.20 | 0.06 | 0.008 | 0.002 | 0.008 | 0.011 | 0.010 |  | 0.78 |
| F | 0.04 | 0.11 | 0.16 | 0.018 | 0.0044 | 0.01 | 0.48 | 0.02 | 2.2 | 0.20 | <u>0.9</u> | 0.16 | 0.02 | 0.020 | 0.002 | 0.011 | 0.010 | 0.014 |  | 0.51 |
| G | 0.09 | 0.30 | 0.35 | 0.019 | 0.0048 | 0.01 | 0.12 | 0.45 | 2.9 | 0.35 | <u>2.6</u> | 0.15 | 0.02 | 0.018 | 0.001 | 0.012 | 0.011 | 0.012 |  | 0.58 |
| H | <u>0.12</u> | 0.28 | 0.32 | 0.020 | 0.0039 | 0.02 | 0.35 | 0.26 | 2.8 | 0.33 | <u>2.4</u> | 0.16 | 0.01 | 0.019 | 0.002 | 0.010 | 0.009 | 0.013 | Ca: 0.002 | 0.63 |
| I | 0.04 | 0.15 | 0.39 | 0.013 | 0.0005 | 0.02 | 0.01 | 0.02 | 2.5 | 0.33 | 1.2 | 0.25 | 0.03 | 0.007 | 0.004 | 0.003 | 0.010 | 0.005 | Ta: 0.02 | 0.05 |
| J | 0.05 | 0.20 | 0.26 | 0.016 | 0.0012 | 0.15 | 0.05 | 0.15 | 2.3 | 0.16 | 2.0 | 0.20 | 0.03 | 0.010 | 0.002 | 0.004 | 0.008 | 0.008 |  | 0.35 |

Table 2: Evaluation results

| Symbol of steel plate | Raw material used | Normalizing heat treatment | | Tempering heat treatment | | Amount of W analyzed as electrolytic extraction residue (%) | Left side of Formula (2) -10 × [B] + 0.07 | Right side of Formula (2) 10 × [B] +0.18 | Tensile test result | Charpy impact test result | Creep rupture test result |
|---|---|---|---|---|---|---|---|---|---|---|---|
| | | Temperature (°C) | Time (hr) | Temperature (°C) | Time (hr) | | | | | | |
| A1 | A | 1050 | 0.5 | 770 | 1 | 0.09 | 0.04 | 0.21 | Pass (excellent) | Pass (excellent) | Pass |
| A2 | A | 1050 | 0.5 | 770 | 2 | 0.13 | 0.04 | 0.21 | Pass (excellent) | Pass (excellent) | Pass |
| A3 | A | 1050 | 0.5 | 770 | 3 | 0.15 | 0.04 | 0.21 | Pass (excellent) | Pass (excellent) | Pass |
| A4 | A | 1050 | 0.5 | 750 | 3 | 0.06 | 0.04 | 0.21 | Pass (excellent) | Pass (excellent) | Pass |
| A5 | A | 1050 | 0.5 | 790 | 3 | 0.20 | 0.04 | 0.21 | Pass (excellent) | Pass (excellent) | Pass |
| A6 | A | 1050 | 0.5 | 770 | 4 | 0.16 | 0.04 | 0.21 | Pass (excellent) | Pass (excellent) | Pass |
| A7 | A | 1050 | 0.5 | 770 | 5 | 0.19 | 0.04 | 0.21 | Pass (acceptable) | Pass (acceptable) | Pass |
| A8 | A | 1050 | 0.5 | 770 | 0.1 | 0.03 | 0.04 | 0.21 | Fail | Fail | Not performed |
| A9 | A | 1050 | 0.5 | 770 | 0.5 | 0.04 | 0.04 | 0.21 | Pass (acceptable) | Pass (acceptable) | Pass |
| A10 | A | 1050 | 0.5 | 770 | 7 | 0.22 | 0.04 | 0.21 | Fail | Fail | Not performed |
| A11 | A | 1050 | 0.5 | 770 | 10 | 0.23 | 0.04 | 0.21 | Fail | Fail | Not performed |
| A12 | A | 950 | 0.5 | 770 | 3 | 0.23 | 0.04 | 0.21 | Fail | Fail | Not performed |
| A13 | A | 950 | 1 | 770 | 3 | 0.22 | 0.04 | 0.21 | Fail | Fail | Not performed |

EP 3 778 972 B1

15

(continued)

| Symbol of steel plate | Raw material used | Normalizing heat treatment | | Tempering heat treatment | | Amount of W analyzed as electrolytic extraction residue (%) | Left side of Formula (2) -10 × [B] + 0.07 | Right side of Formula (2) 10 × [B] +0.18 | Tensile test result | Charpy impact test result | Creep rupture test result |
| --- | --- | --- | --- | --- | --- | --- | --- | --- | --- | --- | --- |
| | | Temperature (°C) | Time (hr) | Temperature (°C) | Time (hr) | | | | | | |
| A14 | A | 1000 | 0.5 | 770 | 3 | 0.21 | 0.04 | 0.21 | Pass (excellent) | Pass (excellent) | Pass |
| A15 | A | 1100 | 0.5 | 770 | 3 | 0.14 | 0.04 | 0.21 | Pass (excellent) | Pass (excellent) | Pass |
| A16 | A | 1150 | 0.5 | 770 | 3 | 0.10 | 0.04 | 0.21 | Pass (excellent) | Pass (acceptable) | Pass |
| B1 | B | 1050 | 0.5 | 770 | 1 | 0.07 | 0.05 | 0.20 | Pass (excellent) | Pass (excellent) | Pass |
| B2 | B | 1050 | 0.5 | 770 | 2 | 0.11 | 0.05 | 0.20 | Pass (excellent) | Pass (excellent) | Pass |
| B3 | B | 1050 | 0.5 | 770 | 3 | 0.13 | 0.05 | 0.20 | Pass (excellent) | Pass (excellent) | Pass |
| B4 | B | 1050 | 0.5 | 750 | 3 | 0.05 | 0.05 | 0.20 | Pass (excellent) | Pass (excellent) | Pass |
| B5 | B | 1050 | 0.5 | 790 | 3 | 0.19 | 0.05 | 0.20 | Pass (acceptable) | Pass (acceptable) | Pass |
| B6 | B | 1050 | 0.5 | 770 | 4 | 0.15 | 0.05 | 0.20 | Pass (excellent) | Pass (excellent) | Pass |
| B7 | B | 1050 | 0.5 | 770 | 5 | 0.17 | 0.05 | 0.20 | Pass (excellent) | Pass (excellent) | Pass |
| B8 | B | 1050 | 0.5 | 770 | 0.1 | 0.02 | 0.05 | 0.20 | Fail | Fail | Not performed |
| B9 | B | 1050 | 0.5 | 770 | 0.5 | 0.03 | 0.05 | 0.20 | Fail | Fail | Not performed |
| B10 | B | 1050 | 0.5 | 770 | 7 | 0.18 | 0.05 | 0.20 | Pass (acceptable) | Pass (acceptable) | Pass |

(continued)

| Symbol of steel plate | Raw material used | Normalizing heat treatment | | Tempering heat treatment | | Amount of W analyzed as electrolytic extraction residue (%) | Left side of Formula (2) -10 × [B] + 0.07 | Right side of Formula (2) 10 × [B] +0.18 | Tensile test result | Charpy impact test result | Creep rupture test result |
|---|---|---|---|---|---|---|---|---|---|---|---|
| | | Temperature (°C) | Time (hr) | Temperature (°C) | Time (hr) | | | | | | |
| B11 | B | 1050 | 0.5 | 770 | 10 | 0.21 | 0.05 | 0.20 | Fail | Fail | Not performed |
| C1 | C | 1050 | 0.5 | 770 | 1 | 0.05 | 0.03 | 0.22 | Pass (excellent) | Pass (excellent) | Pass |
| C2 | C | 1050 | 0.5 | 770 | 2 | 0.07 | 0.03 | 0.22 | Pass (excellent) | Pass (excellent) | Pass |
| C3 | C | 1050 | 0.5 | 770 | 3 | 0.07 | 0.03 | 0.22 | Pass (excellent) | Pass (excellent) | Pass |
| C4 | C | 1050 | 0.5 | 770 | 4 | 0.10 | 0.03 | 0.22 | Pass (excellent) | Pass (excellent) | Pass |
| C5 | C | 1050 | 0.5 | 770 | 5 | 0.11 | 0.03 | 0.22 | Pass (excellent) | Pass (excellent) | Pass |
| D1 | D | 1050 | 0.5 | 770 | 1 | 0.11 | 0.02 | 0.12 | Pass (excellent) | Pass (excellent) | Pass |
| E1 | E | 1050 | 0.5 | 770 | 1 | 0.09 | 0.05 | 0.20 | Pass (excellent) | Pass (excellent) | Pass |
| F1 | F | 1050 | 0.5 | 770 | 1 | 0.03 | 0.05 | 0.20 | Fail | Fail | Not performed |
| G1 | G | 1050 | 0.5 | 770 | 1 | 0.21 | 0.06 | 0.19 | Fail | Fail | Not performed |
| H1 | H | 1050 | 0.5 | 770 | 1 | 0.22 | 0.05 | 0.20 | Fail | Fail | Not performed |
| I1 | I | 1050 | 0.5 | 770 | 1 | 0.04 | 0.03 | 0.22 | Pass (acceptable) | Pass (acceptable) | Pass |
| J1 | J | 1050 | 0.5 | 770 | 1 | 0.16 | 0.05 | 0.20 | Pass (excellent) | Pass (excellent) | Pass |

EP 3 778 972 B1

17

[Amount of W Analyzed as Electrolytic Extraction Residue]

From each of the resulting test materials, a test specimen having a size of 8 mm square and a length of 40 mm was collected, and the amount of W analyzed as the electrolytic extraction residue was measured by the method described in the above described embodiment, namely, by chronopotentiometry. Specifically, anodic dissolution of the test material was carried out at a current density of 20 mA/cm$^2$, by chronopotentiometry using a 10% by volume acetylacetone-1% by mass tetramethyl ammonium chloride-methanol solution, as an electrolytic solution, and carbides were extracted as a residue. After the acid decomposition of the extracted residue, ICP (inductively coupled plasma) emission spectrometry was carried out to measure the mass of W in the residue. The mass of W in the residue was divided by the amount of dissolution of the test material, to determine the amount of W (% by mass) present as carbides, for each test material.

[Tensile Test/ Tensile Strength]

Further, a No. 14A round-bar test specimen in which the diameter of parallel portion is 8 mm and the length of the parallel portion is 55 mm, and which is defined in JIS Z2241: 2011, was collected from each test material, and subjected to a tensile test at normal room temperature (from 10°C to 35°C) in accordance with JIS Z2241:2011. The test materials having a tensile strength of 510 MPa or more, which is the tensile strength required for a base material, were evaluated as "Pass". Among these, those having a tensile strength of 530 MPa or more were evaluated as "Pass (excellent)", and the test materials other than those were evaluated as "Pass (acceptable)". On the other hand, test materials having a tensile strength below 510 MPa were evaluated as "Fail".

[Charpy Impact Test/ Toughness]

Three pieces of V-notch full-size Charpy impact test specimens provided with a 2 mm notch were collected from the central portion in a plate thickness direction of each test material, and subjected to a Charpy impact test. The Charpy impact test was carried out in accordance with JIS Z2242: 2005. The test was carried out at 20°C, and the test materials in each of which the mean value of the absorbed energy of the three pieces of test specimens was 27 J or more were evaluated as "Pass". Among these, the test materials in each of which the three pieces of test specimens each had an absorbed energy of 27 J or more were evaluated as "Pass (excellent)", and the test materials other than those were evaluated as "Pass (acceptable)". On the other hand, the test materials in each of which the mean value of the absorbed energy of the three pieces of test specimens was below 27 J were evaluated as "Fail".

[Creep Rupture Test]

In addition, from each of the test materials which had passed the tensile test and the Charpy impact test, a round-bar creep test specimen was collected, and subjected to a creep rupture test. As the evaluation of the creep strength when used for a long period of time, the creep rupture test was carried out under the conditions of a temperature of 550°C and a pressure of 196 MPa, in which a target rupture time of the base material was 1,000 hours. The creep rupture test was carried out in accordance with JIS Z2271: 2010. The test materials with a rupture time exceeding the target rupture time were evaluated as "Pass", and those with a rupture time below the target rupture time were evaluated as "Fail".
It can be seen from Table 2 that the steels satisfying the requirements defined in the present disclosure stably provide an excellent tensile strength and the required toughness. In addition, it can be seen that these steels also have a high creep strength when used for a long period of time.
In contrast, in each of the test materials of symbols A8, B8, B9 and F1, the amount of W analyzed as the electrolytic extraction residue was below the range defined by Formula (2), namely, the amount of precipitation of carbides was insufficient, and thus the required target tensile strength and toughness were not satisfied.
Further, in each of the test materials of symbols A10, A11, A12, A13, B11, G1 and H1, the amount of W analyzed as the electrolytic extraction residue exceeded the range defined by Formula (2), namely, the carbides precipitated excessively and coarsely, and thus the required target tensile strength and toughness were not satisfied.

< Example 2 >

Ingots were prepared by melting and casting raw materials K to P each having a chemical composition shown in Table 3, in laboratory. The ingots were subjected to hot forging and hot rolling, in this order, and formed to a thickness of 15 mm. The resulting raw materials were processed into plate materials each having a length of 150 mm and a width of 150 mm.
The thus obtained plate materials were subjected to a normalizing heat treatment at 1,050°C for 0.5 hours and a tempering heat treatment at 770°C for one hour, to prepare test materials of steel plates.

In Table 3, under lined values indicate that the amount of Sn are outside the preferred ranges of the present invention.

Table 3: Chemical components of raw materials used (unit: % by mass, balance: Fe and impurities)

| Symbol | C | Si | Mn | P | S | Ni | Co | Cu | Cr | Mo | W | V | Nb | Ti | B | N | Al | O | Sn | Others | Total of Ni, Co and Cu | Right side of Formula (3) $2 \times [\%B] + 0.010$ |
|---|---|---|---|---|---|---|---|---|---|---|---|---|---|---|---|---|---|---|---|---|---|---|
| K | 0.07 | 0.18 | 0.24 | 0.016 | 0.0010 | 0.32 | 0.06 | 0.04 | 2.5 | 0.24 | 1.7 | 0.21 | 0.03 | 0.015 | 0.002 | 0.003 | 0.010 | 0.008 | 0.005 | | 0.42 | 0.014 |
| L | 0.06 | 0.20 | 0.29 | 0.014 | 0.0032 | 0.40 | 0.05 | 0.08 | 2.5 | 0.15 | 1.5 | 0.18 | 0.04 | 0.013 | 0.001 | 0.004 | 0.009 | 0.007 | 0.012 | Ta: 0.02 Ca: 0.0020 | 0.53 | 0.012 |
| M | 0.08 | 0.15 | 0.33 | 0.016 | 0.0008 | 0.02 | 0.10 | 0.15 | 2.4 | 0.30 | 1.6 | 0.19 | 0.06 | 0.012 | 0.005 | 0.010 | 0.008 | 0.012 | 0.018 | | 0.27 | 0.020 |
| N | 0.07 | 0.17 | 0.27 | 0.017 | 0.0023 | 0.38 | 0.02 | 0.09 | 2.7 | 0.27 | 1.6 | 0.18 | 0.06 | 0.015 | 0.004 | 0.005 | 0.011 | 0.005 | 0.002 | Mg: 0.0010 REM: 0.020 | 0.49 | 0.018 |
| O | 0.09 | 0.27 | 0.31 | 0.020 | 0.0040 | 0.02 | 0.32 | 0.09 | 2.6 | 0.26 | 1.8 | 0.23 | 0.08 | 0.019 | 0.003 | 0.012 | 0.010 | 0.012 | 0.017 | | 0.43 | 0.016 |
| P | 0.09 | 0.29 | 0.35 | 0.020 | 0.0043 | 0.03 | 0.15 | 0.13 | 2.4 | 0.25 | 1.7 | 0.22 | 0.09 | 0.018 | 0.002 | 0.012 | 0.009 | 0.013 | 0.016 | Ta: 0.05 | 0.31 | 0.014 |

[Evaluation Tests]

Each of the thus obtained test materials was subjected to the measurement of the amount of W analyzed as the electrolytic extraction residue, the tensile test and the Charpy impact test (using each test material as it is), as described above.

Further, for each of the test materials, a test material which had been subjected to five cycles of heating and cooling: "room temperature → 550°C for 108 hours → room temperature" was prepared. Thereafter, three pieces of V-notch full-size Charpy impact test specimens provided with a 2 mm notch were collected from the central portion in the plate thickness direction of each test material, and subjected to the Charpy impact test. The Charpy impact test was carried out in accordance with JIS Z2242: 2005. The test was carried out at 20°C, and the test materials in each of which the mean value of the absorbed energy of the three pieces of test specimens was 27 J or more were evaluated as "Pass". Among these, the test materials in each of which the three pieces of test specimens each had an absorbed energy of 27 J or more were evaluated as "Pass (excellent)", and the test materials other than those were evaluated as "Pass (acceptable)". On the other hand, the test materials in each of which the mean value of the absorbed energy of the three pieces of test specimens was below 27 J were evaluated as "Fail".

Further, from each of the test materials which had passed the tensile test and the Charpy impact test (for each test material as it is, and for one after being subjected to repeated heating and cooling), a round-bar creep test specimen was collected, and subjected to the above described creep rupture test.

Table 4: Evaluation results

| Symbol of steel plate | Raw material used | Normalizing heat treatment | | Tempering heat treatment | | Amount of W analyzed as electrolytic extraction residue (%) | Left side of Formula (2) -10 × [B] + 0.07 | Right side of Formula (2) 10 × [B] + 0.18 | Tensile test result | Charpy impact test result | | Creep rupture test result |
|---|---|---|---|---|---|---|---|---|---|---|---|---|
| | | Temperature (°C) | Time (hr) | Temperature (°C) | Time (hr) | | | | | Test material as it is | After repeated heating and cooling | |
| K1 | K | 1050 | 0.5 | 770 | 1 | 0.10 | 0.05 | 0.20 | Pass (excellent) | Pass (excellent) | Pass (excellent) | Pass |
| L1 | L | 1050 | 0.5 | 770 | 1 | 0.09 | 0.06 | 0.19 | Pass (excellent) | Pass (excellent) | Pass (acceptable) | Pass |
| M1 | M | 1050 | 0.5 | 770 | 1 | 0.09 | 0.02 | 0.23 | Pass (excellent) | Pass (excellent) | Pass (excellent) | Pass |
| N1 | N | 1050 | 0.5 | 770 | 1 | 0.10 | 0.03 | 0.22 | Pass (excellent) | Pass (excellent) | Pass (excellent) | Pass |
| O1 | O | 1050 | 0.5 | 770 | 1 | 0.12 | 0.04 | 0.21 | Pass (excellent) | Pass (excellent) | Fail | Not performed |
| P1 | P | 1050 | 0.5 | 770 | 1 | 0.11 | 0.05 | 0.20 | Pass (excellent) | Pass (acceptable) | Fail | Not performed |

22

It can be seen from Table 4 that the steels satisfying the requirements defined in the present invention provide excellent tensile strength, and in addition, a favorable toughness even in the case of being subjected to repeated heating to a high temperature and cooling. Further, it can be seen that the steels also have the target creep strength.

In contrast, in each of the test materials of symbols O1 and P1, the amount of Sn exceeded the preferred value determined from the relationship with the amount of B. Thus, although the toughness of each test material as it is satisfied the required performance, the target toughness after being subjected to repeated heating and cooling was not satisfied.

The above results revealed that it is possible to obtain a low alloy heat-resistant steel which stably provides an excellent tensile strength and toughness, and which also provides a high creep strength when used for a long period of time, only in a case in which the requirements defined in the present invention are satisfied.

Industrial Applicability

According to the present invention, it is possible to provide a low alloy heat-resistant steel which contains W and B, and which stably provides an excellent tensile strength and toughness, and a steel pipe formed therefrom.

**Claims**

1. A low alloy heat-resistant steel comprising, by mass:

from 0.03% to 0.09% of C;
from 0.10% to 0.30% of Si;
from 0.15% to 0.60% of Mn;
0.020% or less of P;
0.0060% or less of S;
from 0.01% to 0.50% of Ni;
from 0.01% to 0.50% of Co;
from 0.01% to 0.50% of Cu;
from 2.0% to 3.0% of Cr;
from 0.05% to 0.35% of Mo;
from 1.0% to 2.2% of W;
from 0.15% to 0.28% of V;
from 0.01% to 0.11% of Nb;
from 0.002% to 0.022% of Ti;
from 0.001% to 0.006% of B;
from 0.001% to 0.012% of N;
0.020% or less of Al; and
0.020% or less of O; and
optionally at least one element selected from the group consisting of
0.20% or less of Ta;
0.0150% or less of Ca;
0.0150% or less of Mg;
0.050% or less of REM; and
Sn in an amount satisfying the following Formula (3);

$$[\%Sn] \leq 2 \times [\%B] + 0.010\,(\%) \qquad (3)$$

with a balance consisting of Fe and impurities,
wherein a total amount of Ni, Co and Cu satisfies the following Formula (1), and an amount of W, analyzed as an electrolytic extraction residue, satisfies the following Formula (2):

$$0.03 \leq [\%Ni] + [\%Co] + [\%Cu] \leq 0.80 \qquad (1)$$

$$-10 \times [\%B] + 0.07 \leq [\%W]_{ER} \leq 10 \times [\%B] + 0.18 \qquad (2)$$

wherein in Formuale (1), (2) and (3), [%Ni], [%Co], [%Cu], [%B] and [%Sn] represent amounts of Ni, Co, Cu, B and Sn, in % by mass, contained in the steel, respectively; and $[\%W]_{ER}$ represents an amount of W, analyzed as the electrolytic extraction residue determined by the method defined in the description, in % by mass.

2. The low alloy heat-resistant steel according to claim 1, which has a tensile strength, as defined in JIS Z2241: 2011, of 510 MPa or more; and a full-size Charpy absorbed energy at 20°C, as defined in JIS Z2242: 2005, of 27 J or more, which is the mean value of the absorbed energy of three V-notch full-size pieces.

3. A steel pipe formed from the low alloy heat-resistant steel according to any one of claims 1 to 2.

**Patentansprüche**

1. Ein niedriglegierter hitzebeständiger Stahl, umfassend, in Masse:

   von 0,03% bis 0,09% C;
   von 0,10% bis 0,30% Si;
   von 0,15% bis 0,60% Mn;
   0,020% oder weniger P;
   0,0060% oder weniger S;
   von 0,01% bis 0,50% Ni;
   von 0,01% bis 0,50% Co;
   von 0,01% bis 0,50% Cu;
   von 2,0% bis 3,0% Cr;
   von 0,05% bis 0,35% Mo;
   von 1,0% bis 2,2% W;
   von 0,15% bis 0,28% V;
   von 0,01% bis 0,11% Nb;
   von 0,002% bis 0,022% Ti;
   von 0,001% bis 0,006% B;
   von 0,001% bis 0,012% N;
   0,020% oder weniger Al; und
   0,020% oder weniger O; und
   gegebenenfalls mindestens ein Element, ausgewählt aus der Gruppe bestehend aus
   0,20% oder weniger Ta;
   0,0150% oder weniger Ca;
   0,0150% oder weniger Mg;
   0,050% oder weniger Seltenerdmetalle; und
   Sn in einer Menge, die die folgende Formel (3) erfüllt;

$$[\%Sn] \leq 2 \times [\%B] + 0,010 \,(\%) \qquad (3)$$

   wobei ein Rest aus Fe und Verunreinigungen besteht,
   wobei eine Gesamtmenge an Ni, Co und Cu die folgende Formel (1) erfüllt und eine Menge an W, die als elektrolytischer Extraktionsrückstand analysiert wird, die folgende Formel (2) erfüllt:

$$0,03 \leq [\%Ni] + [\%Co] + [\%Cu] \leq 0,80 \qquad (1)$$

$$-10 \times [\%B] + 0,07 \leq [\%W]_{ER} \leq 10 \times [\%B] + 0,18 \qquad (2)$$

   wobei in den Formeln (1), (2) und (3) [%Ni], [%Co], [%Cu], [%B] bzw. [%Sn] im Stahl enthaltene Mengen an Ni, Co, Cu, B bzw. Sn, in Massen-%, darstellen; und $[\%W]_{ER}$ eine Menge an W darstellt, die als elektrolytischer Extraktionsrückstand, bestimmt mit Hilfe des in der Beschreibung definierten Verfahrens, in Massen-% analysiert wurde.

**2.** Der niedriglegierte hitzebeständige Stahl nach Anspruch 1, der eine Zugfestigkeit, wie in JIS Z2241: 2011 definiert, von 510 MPa oder mehr und eine absorbierte Energie nach Charpy in voller Größe bei 20°C, wie in JIS Z2242: 2005 definiert, von 27 J oder mehr aufweist, was der Mittelwert der absorbierten Energie von drei V-Kerbstücken in voller Größe ist.

**3.** Ein Stahlrohr, gebildet aus dem niedriglegierten hitzebeständigen Stahl nach einem der Ansprüche 1 bis 2.

**Revendications**

**1.** Acier faiblement allié résistant à la chaleur comprenant, en masse :

de 0,03 % à 0,09 % de C ;
de 0,10 % à 0,30% de Si;
de 0,15 % à 0,60% deMn ;
0,020 % ou moins de P ;
0,0060 % ou moins de S ;
de 0,01 % à 0,50% de Ni;
de 0,01 % à 0,50 % de Co;
de 0,01 % à 0,50 % de Cu;
de 2,0 % à 3,0 % de Cr ;
de 0,05 % à 0,35 % de Mo;
de 1,0 % à 2,2% de W ;
de 0,15 % à 0,28 % de V;
de 0,01 % à 0,11 % deNb ;
de 0,002 % à 0,022 % de Ti ;
de 0,001 % à 0,006 % de B ;
de 0,001 % à 0,012% de N;
0,020 % ou moins d'Al ; et
0,020 % ou moins d'O ; et
éventuellement au moins un élément choisi dans le groupe constitué par :
0,20 % ou moins de Ta ;
0,0150 % ou moins de Ca ;
0,0150 % ou moins de Mg ;
0,050 % ou moins de REM (éléments des terres rares) ; et
Sn en une quantité satisfaisant à la formule (3) qui suit :

$$[\% \, Sn] \leq 2 \times [\% \, B] + 0,010 \, (\%) \qquad (3)$$

le reste consistant en Fe et impuretés,
dans lequel la quantité totale de Ni, Co et Cu satisfait à la formule (1) qui suit, et la quantité de W, analysée sous la forme d'un résidu d'extraction électrolytique, satisfait à la formule (2) qui suit :

$$0,03 \leq [\% \, Ni] + [\% \, Co] + [\% \, Cu] \leq 0,80 \qquad (1)$$

$$-10 \times [\% \, B] + 0,07 \leq [\% \, W]_{ER} \leq 10 \times [\% \, B] + 0,18 \qquad (2)$$

dans lequel, dans les formules (1), (2) et (3), [% Ni], [% Co], [% Cu], [% B] et [% Sn] représentent respectivement les quantités de Ni, Co, Cu, B et Sn, en % en masse, contenues dans l'acier ; et [% W]$_{ER}$ représente la quantité de W, analysée sous la forme du résidu d'extraction électrolytique déterminé par la méthode définie dans la description, en % en masse.

**2.** Acier faiblement allié résistant à la chaleur selon la revendication 1, qui a une résistance à la traction, telle que définie dans la norme JIS Z2241 : 2011, de 510 MPa ou plus ; et une énergie absorbée Charpy grandeur nature à 20 °C, telle que définie dans la norme JIS Z2242 : 2005, de 27 J ou plus, qui est la valeur moyenne de l'énergie absorbée de trois pièces grandeur nature à entaille en V.

3. Tuyau en acier formé à partir de l'acier faiblement allié résistant à la chaleur de l'une quelconque des revendications 1 à 2.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S6318038 A
- JP H4268040 A
- JP 2002194485 A
- JP 2003064449 A
- JP 2002294402 A
- JP 2003286543 A
- WO 2006112428 A
- EP 1081244 A1
- EP 1143026 A1